# EUROPEAN PATENT APPLICATION

(11) **EP 4 585 400 A1**
(43) Date of publication of application: **16.07.2025**
(21) Application number: 24854448.8
(22) Date of filing: 13.08.2024
(51) Int. Cl.: B29C 51/08, B29C 51/30, B29C 43/36, B29D 99/00, H01M 50/105, H01M 10/052, B29C 55/02, B29L 31/00

(54) **APPARATUS FOR FORMING POUCH-TYPE BATTERY CASE, POUCH-TYPE BATTERY CASE MANUFACTURED USING SAME, AND METHOD FOR FORMING CUP PART OF POUCH-TYPE BATTERY CASE BY USING APPARATUS FOR FORMING POUCH-TYPE BATTERY CASE**

(30) Priority: 17.08.2023 KR 20230107897; 12.08.2024 KR 20240107422
(71) Applicant: LG Energy Solution, Ltd., Seoul 07335 (KR)
(72) Inventor: HONG, Jeong Woo, Daejeon 34122 (KR); LEE, Chung Hee, Daejeon 34122 (KR); BAEK, Keun Hee, Daejeon 34122 (KR)
(74) Representative: Goddar, Heinz J.
(86) International application number: PCT/KR2024/012045
(87) International publication number: WO 2025/037897

(57) **Abstract**

The present invention relates to an apparatus for shaping a pouch-shaped battery case including a punch configured to press a laminate sheet to form a cup portion of the pouch-shaped battery case, a die configured to allow the laminate sheet to be disposed thereabove, the die including a recess configured to allow the punch to be inserted thereinto, and a stripper above the die, the stripper being configured to fix the laminate sheet, the stripper having a through-hole configured such that the punch moves through the through-hole, wherein the die includes an upper end portion and a lower end portion having different heights, the inside of the die includes the upper end portion in the form of a quadrangular frame in plan, and the outside of the die includes the lower end portion, a pouch-shaped battery case manufactured using the same, and a method of shaping a cup portion of a pouch-shaped battery case using the apparatus for shaping a pouch-shaped battery case.

## Description

### [Technical Field]

This application claims the benefit of priority to Korean Patent Application No. 2023-0107897 filed on August 17, 2023 and Korean Patent Application No. 2024-0107422 filed on August 12, 2024, the disclosure of which is incorporated herein by reference in its entirety.

The present invention relates to an apparatus for shaping a pouch-shaped battery case capable of preventing formation of cracks in a part having a thickness reduced due to stretching when shaping a cup portion of a pouch-shaped battery cell, a pouch-shaped battery case manufactured using the same, and a method of shaping a cup portion of a pouch-shaped battery case using the apparatus for shaping a pouch-shaped battery case.

### [Background Art]

A lithium secondary battery, which is capable of being charged and discharged, has been widely used as an energy source for wireless mobile devices or wearable devices, which are worn on bodies, and has also been used as an energy source for electric vehicles and hybrid electric vehicles presented as alternatives to existing gasoline and diesel vehicles, which cause air pollution.

Based on the material of a case thereof, the lithium secondary battery may be classified as a cylindrical secondary battery made of a metal material, a prismatic secondary battery made of a metal material, or a pouch-shaped secondary battery made of a laminate sheet. The pouch-shaped secondary battery has advantages in that the pouch-shaped secondary battery is stacked with a high degree of integration, thereby having high energy density per unit weight, is manufactured at low cost, and is easily deformable. Consequently, the pouch-shaped secondary battery is used in various devices.

The pouch-shaped secondary battery uses a laminate sheet including an outer coating layer, a metal blocking layer, and an inner adhesive layer as a battery case, and is configured to have a structure in which an electrode assembly is received in a receiving portion formed in the laminate sheet together with an electrolytic solution.

In order to shape an electrode assembly receiving portion in the pouch-shaped battery case, a method of disposing a laminate sheet on a die, fixing the laminated sheet using a holder, and pressing the laminate sheet using a punch is used. In the process of shaping the electrode assembly receiving portion, appearance defects, such as pinholes or cracks, are formed on the outer surface of the laminate sheet due to limited ductility of the laminate sheet and the force of friction between the punch and the laminate sheet.

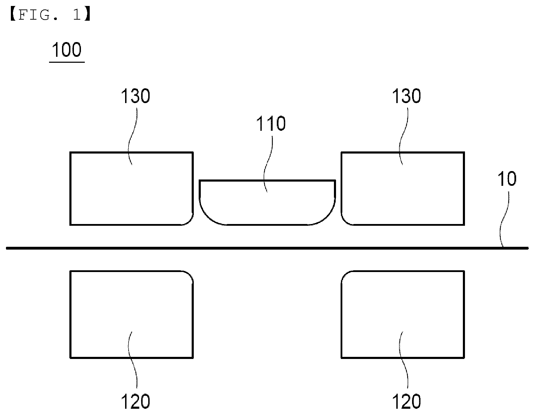

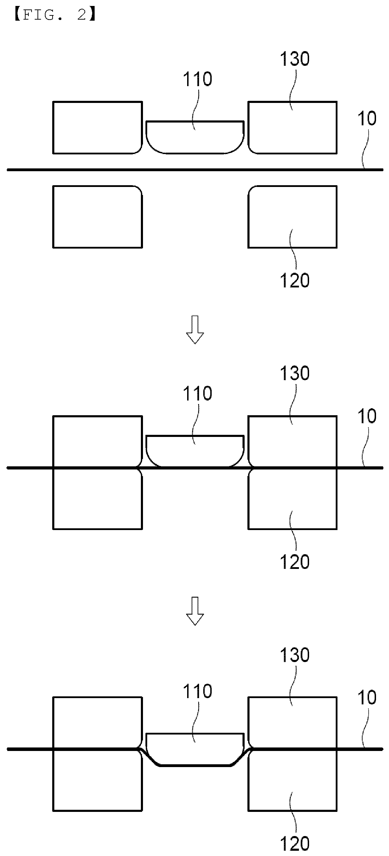

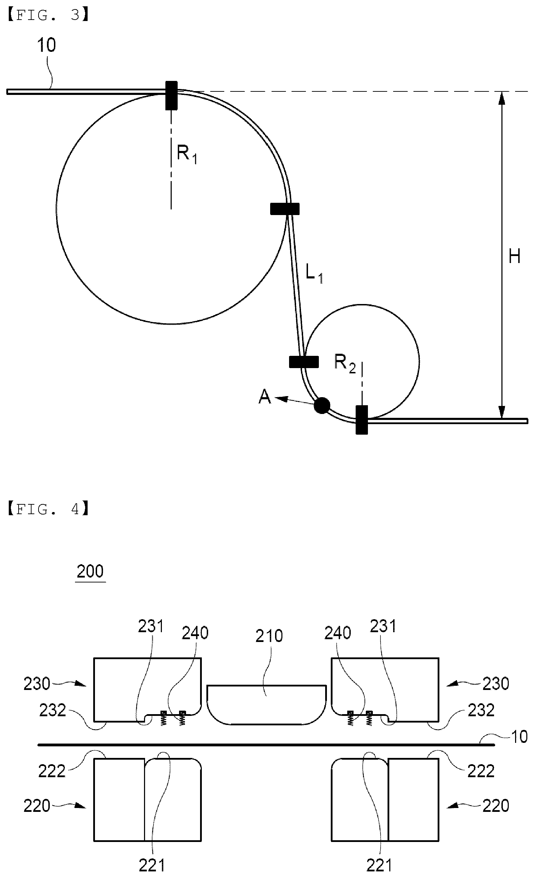

FIG. 1 is a front view of a conventional apparatus for shaping a pouch-shaped battery case, FIG. 2 is a view showing a step of shaping a cup portion of a pouch-shaped battery case using the apparatus for shaping a pouch-shaped battery case of FIG. 1, and FIG. 3 is a partial vertical sectional view of a pouch-shaped battery case manufactured using the apparatus for shaping a pouch-shaped battery case of FIG. 1.

Referring to FIGs. 1 to 3, the apparatus for a pouch-shaped battery case 100 includes a die 120 configured to allow a laminate sheet 10 to be disposed thereabove, a stripper 130 located above the die 120, the stripper being configured to fix the laminate sheet 10, and a punch 110 configured to press the laminate sheet 10 in order to form a cup portion.

An upper surface of the die 120 of the apparatus for shaping a pouch-shaped battery case 100 and a lower surface of the stripper 130 configured to be in tight contact with the upper surface of the die 120 are flat.

Therefore, after the laminate sheet 10 is disposed between the die 120 and the stripper 130, when the laminate sheet 10 is pressed using the punch 110 in the state in which the laminate sheet 10 is fixed by the die 120 and the stripper 130, as shown in FIG. 2, a pouch-shaped battery case having the shape shown in FIG. 3 is manufactured.

In the pouch-shaped battery case of FIG. 3, the depth H of a cup portion, in which an electrode assembly is received, may be expressed as the sum of R₁ of a curved surface of an upper end of the cup portion, R₂ of a curved surface of a lower end of the cup portion, and L₁, which is the length of a planar section of a side surface of the cup portion.

Since the part that becomes the lower end of the cup portion is stretched first when the pouch-shaped battery case is shaped, the lower end of the cup portion is the most stretched part when shaping is completed. In FIG. 3, part A is the maximally stretched part, resulting in a small residual thickness. Therefore, there is a high risk of pinholes or cracks in part A.

Accordingly, there is a need for technology capable of more deeply shaping the cup portion to increase the capacity of the pouch-shaped battery case while preventing the occurrence of pinholes or cracks due to excessive stretching.

### [Disclosure]

### [Technical Problem]

The present invention has been made in view of the above problems, and it is an object of the present invention to provide an apparatus for shaping a pouch-shaped battery case capable of preventing excessive stretching of a part of a laminate sheet when shaping a pouch-shaped battery case, thereby improving the quality of a pouch-shaped battery cell, which is a final product, a pouch-shaped battery case manufactured using the same, and a method of shaping a cup portion of a pouch-shaped battery case using the apparatus for shaping a pouch-shaped battery case.

### [Technical Solution]

An apparatus for shaping a pouch-shaped battery case according to the present invention to accomplish the above object includes a punch configured to press a laminate sheet to form a cup portion of the pouch-shaped battery case, a die configured to allow the laminate sheet to be disposed thereabove, the die including a recess configured to allow the punch to be inserted thereinto, and a stripper above the die, the stripper configured to fix the laminate sheet, the stripper having a through-hole configured such that the punch moves through the through-hole, wherein the die includes an upper end portion and a lower end portion having different heights, and an inside of the die includes the upper end portion in the form of a quadrangular frame in plan and an outside of the die includes the lower end portion.

The stripper may have a step configured to be in tight contact with the upper end portion and the lower end portion of the die, and the stripper may include an inner portion configured to be in tight contact with the upper end portion of the die and an outer portion configured to be in tight contact with the lower end portion of the die.

The die may be configured such that the upper end portion and the lower end portion of the die are separately and independently movable upward and downward.

A lower surface of the inner portion of the stripper may include a recess, and the stripper may include an elastic member, wherein at least a part of the elastic member is seated in the recess.

The elastic member may be a spring, the recess may be formed so as to be spaced apart from each other by a predetermined distance, and the spring may be added such that at least a part of the spring is received in the recess.

The recesses may be formed so as to be spaced apart from each other by the predetermined distance along a quadrangular line, and the quadrangular line may be constituted by two lines spaced apart from each other.

The elastic member may be an elastic rubber, the recess may be in the form of a quadrangular ring, and at least a part of the elastic rubber is seated in the recess.

The recess may be constituted by two lines spaced apart from each other.

The punch may have a curved surface at the boundary where a lower surface and a side surface join each other, wherein the lower surface is configured to be a pressing surface.

The die may have a curved surface at the boundary where the upper end portion and an inner surface of the upper end portion join each other.

The inner portion of the stripper and the upper end portion of the die are configured to come into tight contact with each other such that the entirety of the elastic member may be received in the recess, and the elastic member may be configured to bring the laminate sheet into tight contact with the upper end portion of the die in a maximally compressed state.

The inner portion of the stripper and the upper end portion of the die are configured to come into tight contact with each other such that the laminate sheet may be stretched along a surface of the upper end portion of the die.

A pouch-shaped battery case manufactured using the apparatus for shaping a pouch-shaped battery case is configured such that an outer periphery of a cup portion includes an inside outer periphery and an outside outer periphery and the height from the bottom of the cup portion to the inside outer periphery of the cup portion is greater than the height from the bottom of the cup portion to the outside outer periphery of the cup portion.

The height from the bottom of the cup portion to the inside outer periphery of the cup portion may be the sum of the height difference between the upper end portion and the lower end portion of the die of the apparatus for shaping a pouch-shaped battery case and the height of the lower end portion of the die.

A method of shaping a cup portion of a pouch-shaped battery case using the apparatus for shaping a pouch-shaped battery case includes a first step comprising disposing a laminate sheet between the die and the stripper and disposing the punch in the through-hole of the stripper, a second step comprising bringing the lower end portion of the die and the outer portion of the stripper into tight contact with each other while the laminate sheet is interposed therebetween, wherein a height of an upper surface of the upper end portion and a height of an upper surface of the lower end portion of the die are the same, a third step comprising moving the upper end portion of the die upward to perform first-stage stretching of the laminate sheet, wherein the upper end portion and the inner portion of the stripper come into tight contact with each other while the laminate sheet is interposed therebetween, and a fourth step comprising moving the punch downward to perform second-stage stretching of the laminate sheet, which is in the state of having been first-stage stretched, and to shape the cup portion of the pouch-shaped battery cell , wherein, in the second step, the laminate sheet is fixed in position by tight contact between the lower end portion of the die and the outer portion of the stripper.

In the third step, first-stage stretching of the laminate sheet may be performed at the position where an upper end of the cup portion is to be formed.

In the fourth step, the laminate sheet may be pressed toward the upper end portion of the die by elastic force of the elastic member on the lower surface of the inner portion of the stripper such that the laminate sheet is fixed in position.

In addition, the present invention may provide various combinations of the above solving means.

### [Advantageous Effects]

As is apparent from the above description, an apparatus for shaping a pouch-shaped battery case according to the present invention includes a structure in which a step is formed on an upper surface of a die and a lower surface of a stripper, and since the laminate sheet is stretched twice, once when the die and the stripper come into tight contact with each other, and again when the laminate sheet is pressed using a punch, it is possible to prevent excessive stretching of a part of the laminate sheet.

In addition, since the depth of a cup portion of a pouch-shaped battery case manufactured using the same is increased, it is possible to provide a pouch-shaped battery cell having an increased capacity.

### [Description of Drawings]

FIG. 1 is a front view of a conventional apparatus for shaping a pouch-shaped battery case.
FIG. 2 is a view showing a step of shaping a cup portion of a pouch-shaped battery case using the apparatus for shaping a pouch-shaped battery case of FIG. 1.
FIG. 3 is a partial vertical sectional view of a pouch-shaped battery case manufactured using the apparatus for shaping a pouch-shaped battery case of FIG. 1.
FIG. 4 is a front view of an apparatus for shaping a pouch-shaped battery case according to a first embodiment.
FIG. 5 is a perspective view of a die of the apparatus for shaping a pouch-shaped battery case according to the first embodiment.
FIG. 6 is a perspective view of a stripper of the apparatus for shaping a pouch-shaped battery case according to the first embodiment.
FIG. 7 is a perspective view of a stripper of an apparatus for shaping a pouch-shaped battery case according to a second embodiment.
FIG. 8 is a view showing a step of shaping a cup portion of a pouch-shaped battery case using the apparatus for shaping a pouch-shaped battery case according to the first embodiment.
FIG. 9 is a partial vertical sectional view of a pouch-shaped battery case manufactured using the apparatus for shaping a pouch-shaped battery case according to the present invention.
FIG. 10 is a photograph of a corner part of a pouch-shaped battery case manufactured in an example.
FIG. 11 is a photograph of a corner part of a pouch-shaped battery case manufactured in a comparative example.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

The same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

Embodiments of the present invention will be described in detail with reference to the accompanying drawings.

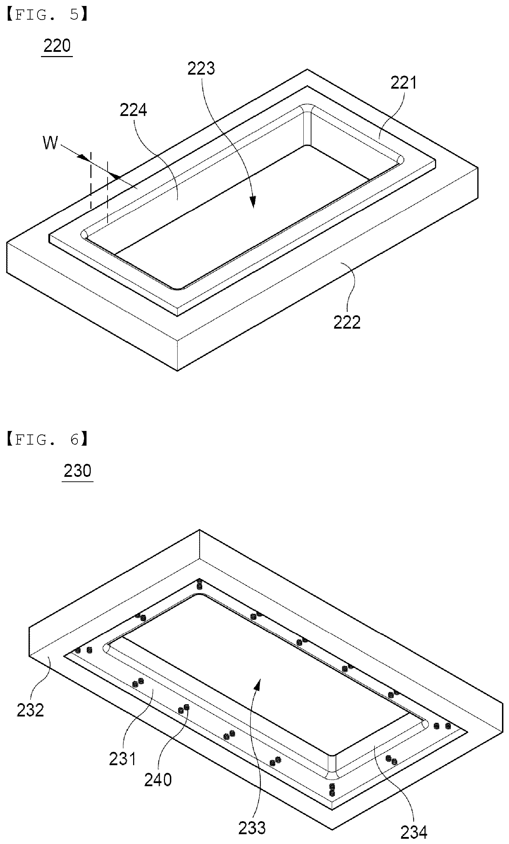

FIG. 4 is a front view of an apparatus for shaping a pouch-shaped battery case according to a first embodiment, FIG. 5 is a perspective view of a die of the apparatus for shaping a pouch-shaped battery case according to the first embodiment, and FIG. 6 is a perspective view of a stripper of the apparatus for shaping a pouch-shaped battery case according to the first embodiment.

Referring to FIGs. 4 to 6, the apparatus for shaping a pouch-shaped battery case 200 according to the present invention includes a punch 210 configured to press a laminate sheet 10 to form a cup portion of the pouch-shaped battery case, a die 220 including a recess 223 into which the punch 210 is inserted, and a stripper 230 located above the die 220, the stripper configured to fix the laminate sheet 10, the stripper having a through-hole 233, through which the punch 210 is moved, formed therein.

The laminate sheet 10 is disposed between the top of the die 220 and the bottom of the stripper 230, and the die 220 and the stripper 230 come into tight contact with each other to fix the laminate sheet 10.

The die 220 includes an upper end portion 221 and a lower end portion 222 having different heights, and is configured such that, when the die 220 and the stripper 230 come into tight contact with each other, an upper surface of the upper end portion 221 protrudes upward farther than an upper surface of the lower end portion 222.

The upper end portion 221 constitutes the inside of the die 220, which is in the form of a quadrangular frame in plan, and the lower end portion 222 constitutes the outside of the die 220.

That is, in the apparatus for shaping a pouch-shaped battery case according to the present invention, the inside of the die 220 adjacent to the recess 223, which is located in the center of the die, constitutes an upper end portion 221 that is convex upward farther than the outside of the die, and the outside of the die 220 constitutes a lower end portion 222 that is concave downward farther than the inside of the die.

In the apparatus for shaping a pouch-shaped battery case according to the first embodiment, the upper end portion 221 and the lower end portion 222 constituting the die 220 are configured to be separately and independently movable upward and downward.

The die 220 has a curved surface at the boundary where the upper end portion 221 and an inner surface 224 of the upper end portion 221 join each other such that the laminated sheet 10 can be prevented from being damaged by friction between the punch 210 and the die 220 when shaping the cup portion on the laminated sheet 10 using the punch 210.

The punch 210 has a curved surface at the boundary where a lower surface, which is a pressing surface, and a side surface join each other such that the laminated sheet 10 can be prevented from being damaged at the curved surface of the punch 210 which the laminate sheet 10 and the punch 210 come into contact with when stretching the laminate sheet 10 using the punch 210.

A lower surface of the stripper 230 is configured to have a stepped structure so as to be in tight contact with the upper end portion 221 and the lower end portion 222 of the die 220 forming a step, and the stripper 230 includes an inner portion 231 configured to be in contact with an upper surface of the upper end portion 221 of the die 220 and an outer portion 232 configured to be in contact with an upper surface of the lower end portion 222 of the die 230.

That is, in the apparatus for shaping a pouch-shaped battery case according to the present invention, the stripper is configured such that the inner portion 231 adjacent to the through-hole 233, which is located in the center of the stripper, is concave upward farther than the outer portion 232, whereby the height of the inner portion 231 is less than the height of the outer portion 232.

The stripper 230 has a curved surface at the boundary where a lower surface of the inner portion 231 and an inner surface 234 join each other such that the laminated sheet 10 can be prevented from being damaged by friction between the stripper 230 and the punch 210 when pressing the laminated sheet 10 using the punch 210 to shape the cup portion.

In order to prevent wrinkling of the laminate sheet 10 during the process of stretching the laminate sheet 10 to shape the cup portion, a structure capable of reliably fixing the laminate sheet 10 may be provided.

In this regard, a recess is formed in a lower surface of the inner portion 231 of the stripper 230, and an elastic member is added so as to be received in the recess. The elastic member is configured such that a part of an upper portion is received and fixed in the recess and the remaining part protrudes outward from the lower surface of the inner portion 231. Since the elastic member contracts and becomes more elastic as the stripper 230 and the die 220 approach each other, the elastic member may strongly press the laminate sheet 10 in the direction toward the die 220, whereby the laminate sheet 10 may be reliably fixed.

In a specific example, the elastic member may be a spring 240, in which case, the recesses may be formed so to be spaced apart from each other by a predetermined distance. The recesses may be formed in the lower surface of the inner portion 231, which is in the form of a quadrangular frame, so as to be spaced apart from each other by a predetermined distance along a quadrangular line, wherein the quadrangular line is constituted by two lines spaced apart from each other.

Alternatively, unlike what is shown in FIG. 6, the recesses may not be spaced apart from each other by a predetermined distance but may be formed continuously along the quadrangular line, and the spring may be received along the quadrangular line of the recesses so as to be tight contact therewith.

An upper portion of the spring 240 may be received in the recess, and the remaining portion may protrude farther than a lower surface of an outer circumferential portion 232 in the state in which the spring 240 is uncompressed.

Meanwhile, in a pouch-shaped battery case manufactured using the apparatus for shaping a pouch-shaped battery case according to the present invention, a sealed portion may be formed in the part of the laminate sheet 10 interposed between the upper end portion 221 of the die 220 and the inner portion 231 of the stripper 230 that are in tight contact with each other, and the width W of the upper end portion 221 of the die 220 may be equal to or greater than the width of the sealed portion in order to secure sealing force of the sealed portion.

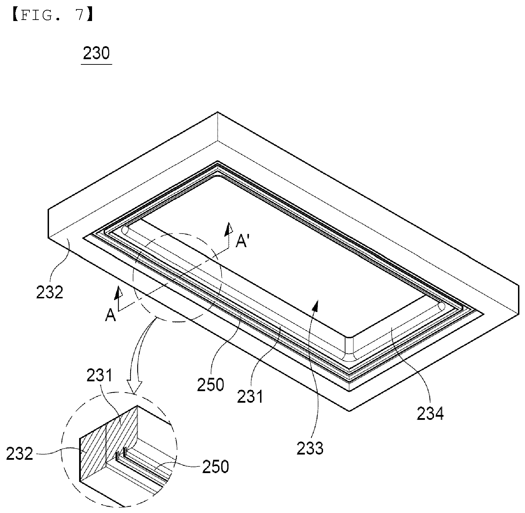

FIG. 7 is a perspective view of a stripper of an apparatus for shaping a pouch-shaped battery case according to a second embodiment.

Referring to FIG. 7, the stripper of the apparatus for shaping a pouch-shaped battery case according to the second embodiment is different from the stripper of the apparatus for shaping a pouch-shaped battery case according to the first embodiment in that a recess formed in the lower surface of the inner portion 231 is in the form of a quadrangular ring, the elastic member is an elastic rubber 250, and the elastic rubber 250 is added such that at least a part of the elastic rubber is received in the recess.

The recess may be constituted by a single quadrangular ring line, or may be constituted by two quadrangular ring lines spaced apart from each other.

Since the elastic rubber 250 is received in the recess, the greater the number of recesses, the greater the force with which the elastic rubber 250 presses the laminate sheet 10 against the upper end portion 221 of the die 220, thereby reliably fixing the laminate sheet 10. Thus, wrinkling of the laminate sheet 10 may be prevented during the process of stretching the laminate sheet 10.

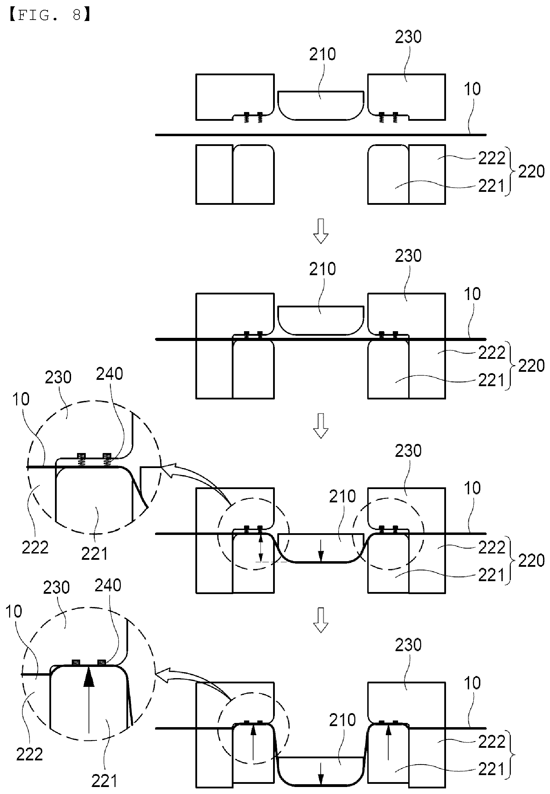

FIG. 8 is a view showing a step of shaping a cup portion of a pouch-shaped battery case using the apparatus for shaping a pouch-shaped battery case according to the first embodiment.

Referring to FIG. 8 together with FIGs. 5 and 6, the method of shaping the cup portion of the pouch-shaped battery case according to the present invention includes a first step of disposing a laminate sheet 10 between the die 220 and the stripper 230 and disposing the punch 210 in the through-hole 233 of the stripper 230, a second step of bringing the lower end portion 222 of the die 220 and the outer portion 232 of the stripper 230 into tight contact with each other while the laminate sheet 10 is interposed therebetween in the state in which the heights of the upper surfaces of the upper end portion 221 and the lower end portion 222 of the die 220 are the same, a third step of moving the upper end portion 221 of the die 220 upward to perform first-stage stretching of the laminate sheet 10, wherein the upper end portion 221 and the inner portion 231 of the stripper 230 come into tight contact with each other while the laminate sheet 10 is interposed therebetween, and a fourth step of moving the punch 210 downward to perform second-stage stretching of the laminate sheet 10, which is in the state of having been first-stage stretched, and to shape the cup portion of the pouch-shaped battery cell.

In the second step, the laminate sheet 10 is fixed in position by tight contact between the lower end portion 222 of the die 220 and the outer portion 232 of the stripper 230.

In addition, the spring 240 added to the inner portion 231 of the stripper 230 may be in contact with the laminate sheet 10, and when the spring 240 is compressed by the laminate sheet 10, the spring may press the laminate sheet 10 toward the upper end portion 221 of the die 220 by elastic force. Consequently, the laminate sheet 10 may be more firmly fixed.

While the laminate sheet 10 is held in a taut state in the second step, first-stage stretching of the laminate sheet 10 may be performed in the third step.

Specifically, a step is formed between the upper end portion 221 and the lower end portion 222 of the die 220 and a step is formed between the inner portion 231 and the outer portion 232 of the stripper 230, and therefore, when the inner portion 231 of the stripper 230 and the upper end portion 221 of the die 220 come into tight contact with each other, the part of the laminate sheet interposed between the die 220 and the stripper 230 is stretched by the height of the step.

That is, first-stage stretching at the part of the laminated sheet 10 that becomes an upper end of the cup portion may be performed merely by coupling between the inner portion 231 of the stripper 230 and the upper end portion 221 of the die 220 in tight contact with each other. When using the apparatus for shaping a pouch-shaped battery case according to the present invention, therefore, the effect of further stretching of the laminate sheet by the height of the step of the die and stripper may be obtained, compared to when using a conventional die and stripper without a step.

As such, since the apparatus for shaping a pouch-shaped battery case 200 according to the present invention performs the first-stage stretching process of stretching the laminate sheet 10 by the height of the step of the die 220 and the stripper 230, damage to the laminate sheet 10 due to excessive stretching may be reduced, compared to when using an apparatus for shaping a pouch-shaped battery case having no step.

In a specific example, the height of the step formed by the upper end portion 221 and the lower end portion 222 may be within 6 mm. A step height of 6 mm or more is undesirable because cracks may be formed at the corner of the laminate sheet when first-stage stretching of the laminate sheet is performed in the process in which the die 220 and the stripper 230 come into tight contact with each other. Considering a range within which the residual thickness of the metal layer of the pouch-shaped battery case satisfies 60% of the thickness before stretching, the height of the step may be 6 mm or less.

In the fourth step, the laminate sheet 10 may be fixed in position in a state of being pressed toward the upper end portion 221 of the die 220 by the elastic force of the elastic member added to the lower surface of the inner portion 231 of the stripper 230.

As such, in the fourth step, not only may the laminate sheet 10 be fixed as the inner portion 231 of the stripper 230 and the upper end portion 221 of the die 220 come into tight contact with each other, but also, since the elastic force of the spring 240 is added to force to press the laminate sheet 10, wrinkling of the laminate sheet 10 may be prevented in the process of pressing the laminate sheet 10 using the punch 210.

Meanwhile, when the inner portion 231 of the stripper 230 and the upper end portion 221 of the die 220 come into tight contact with each other, the entirety of the spring 240 may be received in the recess formed in the lower surface of the inner portion 9231 of the stripper 230 in a maximally compressed state, whereby the laminate sheet 10 may be brought into tight contact with the upper end portion 221 of the die 220.

In the case of using the stripper of the apparatus for shaping a pouch-shaped battery case according to the second embodiment, when the inner portion 231 of the stripper 230 and the upper end portion 221 of the die 220 come into tight contact with each other, the entirety of the elastic rubber 250 may be received in the recess formed in the lower surface of the inner portion 231 of the stripper 230 in a maximally compressed state, whereby the laminate sheet 10 may be brought into tight contact with the upper end portion 221 of the die 220.

The third step is performed before the fourth step. That is, in the present invention, the laminate sheet is stretched two times, such as first-stage stretching of the laminate sheet in the third step and second-stage stretching of the laminate sheet in the fourth step.

Also, in the first-stage stretching, stretching is mainly performed at the corner that becomes an upper end of the cup portion when the cup portion is completed, and in the second-stage stretching, stretching is mainly performed at the corner that becomes a lower end of the cup portion when the cup portion is completed.

As such, since the parts of the laminate sheet that are mainly stretched during the first-stage stretching and second-stage stretching processes are different, it is possible to more deeply shape the cup portion and to solve the problem of excessive stretching in only a certain part of the laminate sheet.

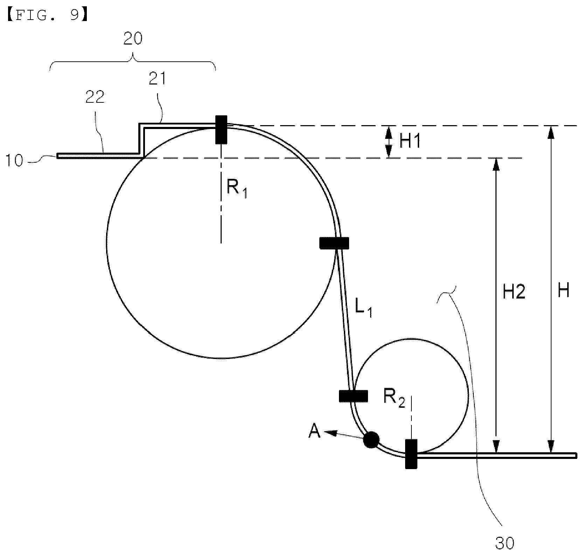

FIG. 9 is a partial vertical sectional view of a pouch-shaped battery case manufactured using the apparatus for shaping a pouch-shaped battery case according to the present invention.

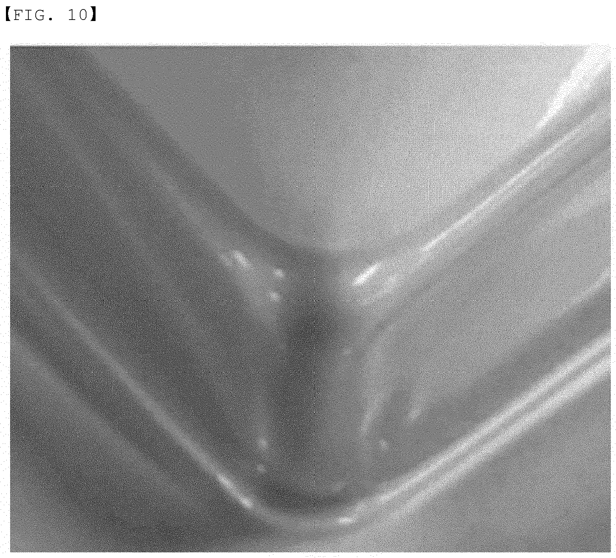

Referring to FIG. 10, an outer periphery 20 of the cup portion 30 includes an inside outer periphery 21 and an outside outer periphery 22, and the height H from the bottom to the inside outer periphery 21 of the cup portion 30 is greater than the height H2 from the bottom to the outside outer periphery 22 of the cup portion 30.

That is, the height H from the bottom to the inside outer periphery 21 of the cup portion 30 is the sum of the height difference H1 between the upper end portion 221 and the lower end portion 222 of the die 220 of the apparatus for shaping a pouch-shaped battery case 200 and the height H2 of the lower end portion 222 of the die.

As such, in the present invention, since the cup portion 30 is shaped while the depth of the cup portion is increased by H1, excessive stretching of a part of the laminate sheet 10 for the pouch-shaped battery case may be reduced, thereby preventing the occurrence of cracks, and a pouch-shaped battery cell with increased capacity may be provided.

Hereinafter, the present invention will be described with reference to the following example, which is provided only for easier understanding of the present invention and should not be construed as limiting the scope of the present invention.

### <Example>

As shown in FIG. 4, an apparatus for shaping a pouch-shaped battery case including a die having a protruding upper end portion formed at the inside of an upper surface thereof and a concave lower end portion formed at the outside of the upper surface thereof, a stripper having an inner portion formed at a lower surface thereof so as to be in tight contact with the upper end portion of the die and an outer portion formed at the lower surface thereof so as to be in tight contact with the lower end portion of the die, and a punch configured to press a laminated sheet is prepared.

A laminate sheet was pressed using the apparatus for shaping a pouch-shaped battery case such that first-stage stretching and second-stage stretching of the laminate sheet was performed to manufacture a pouch-shaped battery case.

FIG. 10 is a photograph of a corner part of the pouch-shaped battery case manufactured in the example.

Referring to FIG. 10, the corner part of the pouch-shaped battery case had a smooth appearance, and therefore the pouch-shaped battery case was determined to be a good product.

### <Comparative Example>

As shown in FIG. 1, an apparatus for shaping a pouch-shaped battery case having a planar form with no step on an upper surface of a die and a lower surface of a stripper is prepared.

A laminate sheet was pressed using the apparatus for shaping a pouch-shaped battery case to manufacture a pouch-shaped battery case.

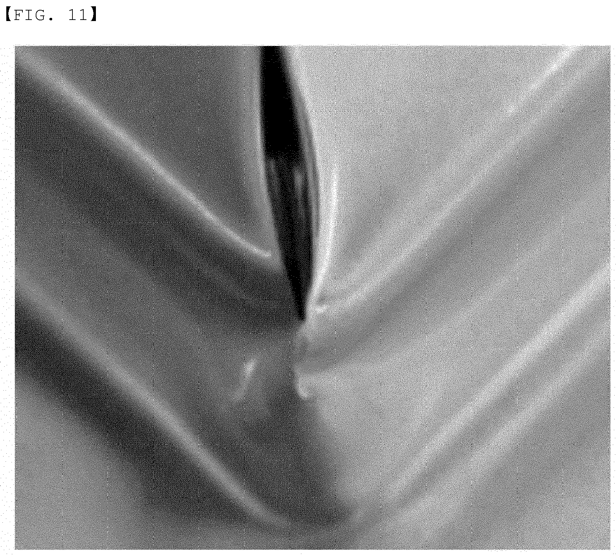

FIG. 11 is a photograph of a corner part of the pouch-shaped battery case manufactured in the comparative example.

Referring to FIG. 11, it can be seen that the corner part of the pouch-shaped battery case was cracked and a side corner of a cup portion was wrinkled. Therefore, the pouch-shaped battery case manufactured in the comparative example was determined to be defective.

Those skilled in the art to which the present invention pertains will appreciate that various applications and modifications are possible within the category of the present invention based on the above description.

### (Description of Reference Symbols)

10: Laminate sheet
20: Outer periphery of cup portion
21: Inside outer periphery
22: Outside outer periphery
30: Cup portion
100, 200: Apparatuses for shaping a oouch-shaped battery case
110, 210: Punches
120, 220: Dies
130, 230: Strippers
221: Upper end portion
222: Lower end portion
223: Recess
224, 234: Inner surfaces
231: Inner portion
232: Outer portion
233: Through-hole
240: Spring
250: Elastic rubber
H: Height from bottom to inside outer periphery of cup portion
H1: Height difference between upper end portion and lower end portion of die
H2: Height of lower end portion of die

## Claims

1. An apparatus for shaping a pouch-shaped battery case, the apparatus comprising:
a punch configured to press a laminate sheet to form a cup portion of the pouch-shaped battery case;
a die configured to allow the laminate sheet to be disposed thereabove, the die comprising a recess configured to allow the punch to be inserted thereinto; and
a stripper above the die, the stripper configured to fix the laminate sheet, the stripper having a through-hole configured such that the punch moves through the through-hole,
wherein the die comprises an upper end portion and a lower end portion, wherein the upper end portion and the lower end portion have different heights, and
wherein an inside of the die comprises the upper end portion, wherein the upper end portion is a quadrangular frame in plan, and wherein an outside of the die comprises the lower end portion.

2. The apparatus according to claim 1, wherein
the stripper has a step configured to be in tight contact with the upper end portion and the lower end portion of the die, and
the stripper comprises an inner portion configured to be in tight contact with the upper end portion of the die and an outer portion configured to be in tight contact with the lower end portion of the die.

3. The apparatus according to claim 1, wherein the upper end portion and the lower end portion of the die are separately and independently movable upward and downward.

4. The apparatus according to claim 2, wherein
a lower surface of the inner portion of the stripper comprises a recess, and
the stripper comprises an elastic member, wherein at least a part of the elastic member is seated in the recess.

5. The apparatus according to claim 4, wherein
the elastic member is a spring,
the recess is formed so as to be spaced apart from each other by a predetermined distance, and
the spring is added such that at least a part of the spring is received in the recess.

6. The apparatus according to claim 5, wherein
the recesses are formed so as to be spaced apart from each other by the predetermined distance along a quadrangular line, and
the quadrangular line is constituted by two lines spaced apart from each other.

7. The apparatus according to claim 4, wherein
the elastic member is an elastic rubber,
the recess is in a form of a quadrangular ring, and
at least a part of the elastic rubber is seated in the recess.

8. The apparatus according to claim 7, wherein the recess is constituted by two lines spaced apart from each other.

9. The apparatus according to claim 1, wherein the punch has a curved surface at a boundary where a lower surface and a side surface join each other, wherein the lower surface is configured to be a pressing surface.

10. The apparatus according to claim 1, wherein the die has a curved surface at a boundary where the upper end portion and an inner surface of the upper end portion join each other.

11. The apparatus according to claim 4, wherein
the inner portion of the stripper and the upper end portion of the die are configured to come into tight contact with each other such that an entirety of the elastic member is received in the recess, and
the elastic member is configured to bring the laminate sheet into tight contact with the upper end portion of the die in a maximally compressed state.

12. The apparatus according to claim 11, wherein, the inner portion of the stripper and the upper end portion of the die are configured to come into tight contact with each other such that the laminate sheet is stretched along a surface of the upper end portion of the die.

13. A pouch-shaped battery case manufactured using the apparatus according to any one of claims 1 to 12, wherein
an outer periphery of a cup portion comprises an inside outer periphery and an outside outer periphery, and
a height from a bottom of the cup portion to the inside outer periphery of the cup portion is greater than a height from the bottom of the cup portion to the outside outer periphery of the cup portion.

14. The pouch-shaped battery case according to claim 13, wherein the height from the bottom of the cup portion to the inside outer periphery of the cup portion is a sum of a height difference between the upper end portion and the lower end portion of the die and a height of the lower end portion of the die.

15. A method of shaping a cup portion of a pouch-shaped battery case using the apparatus according to any one of claims 1 to 12, the method comprising:
a first step comprising disposing a laminate sheet between the die and the stripper and disposing the punch in the through-hole of the stripper;
a second step comprising bringing the lower end portion of the die and the outer portion of the stripper into tight contact with each other while the laminate sheet is interposed therebetween, wherein a height of an upper surface of the upper end portion and a height of an upper surface of the lower end portion of the die are the same;
a third step comprising moving the upper end portion of the die upward to perform first-stage stretching of the laminate sheet, wherein the upper end portion and the inner portion of the stripper come into tight contact with each other while the laminate sheet is interposed therebetween; and
a fourth step comprising moving the punch downward to perform second-stage stretching of the laminate sheet, which is in the state of having been first-stage stretched, and to shape the cup portion of the pouch-shaped battery cell, wherein
in the second step, the laminate sheet is fixed in position by tight contact between the lower end portion of the die and the outer portion of the stripper.

16. The method according to claim 15, wherein, in the third step, first-stage stretching of the laminate sheet is performed at a position where an upper end of the cup portion is to be formed.

17. The method according to claim 15, wherein, in the fourth step, the laminate sheet is pressed toward the upper end portion of the die by elastic force of the elastic member on the lower surface of the inner portion of the stripper such that the laminate sheet is fixed in position.
